# EUROPEAN PATENT APPLICATION

(11) **EP 4 503 248 A1**
(43) Date of publication of application: **05.02.2025**
(21) Application number: 23306325.4
(22) Date of filing: 02.08.2023
(51) Int. Cl.: H01M 10/26

(54) **ELECTROLYTE ADDITIVE FOR ZN-MNO2 BATTERIES**

(71) Applicant: Centre National de la Recherche Scientifique, 75016 Paris (FR); College de France, 75005 Paris (FR); SORBONNE UNIVERSITE, 75006 Paris (FR)
(72) Inventor: Aguilar, Ivette, 75014 Paris (FR); Brown, John, 75010 Paris (FR); Tarascon, Jean-Marie, 75014 Paris (FR)
(74) Representative: Brevalex

(57) **Abstract**

An electrolyte composition for a Zn-MnO₂ electrochemical device said electrolyte comprising water, zinc sulphate and urea, its use and an electrochemical device comprising said electrolyte.

## Description

### Field of the invention

The invention relates to the field of Zn-MnO₂ electrochemical devices such as cell and batteries and more particularly to an electrolyte additive and composition particularly suitable for such devices.

### Background

Zn-MnO₂ batteries (i.e., electrochemical cell and battery having zinc and manganese dioxide electrodes) are commonly used for home electronic devices and medical units due their energy density 80 to 190 Wh.kg⁻¹. The study of zinc cells began early in the development of electrochemical devices, as they were used as the anode in Volta's pile in 1800 and Daniel's pile in 1836. Leclanché presented the first Zn-MnO₂ cells based on a saline electrolyte, followed by the alkaline primary battery in 1950, which is still used for home electronic devices and medical units due to its energy density of 80 to 190 Wh.kg⁻¹. Despite many studies attempting to make Zn-MnO₂ alkaline batteries rechargeable using KOH-based gel, this has never been achieved due to critical issue of Zn passivation and H₂ gassing, mainly resulting from the thermodynamic instability of Zinc in basic pH. In 1986, Yamamoto et al.¹⁻³ made an important step forward in terms of rechargeable Zn-MnO₂ batteries by using ZnSO₄-based aqueous electrolytes. By using a mildly acidic pH, the system resolved stability issues from the anode side. However, this was unsatisfactory due to a limited cycle life of around 25 cycles and significant dead weight mass on the cathode side, with a gravimetric capacity close to 100-200 mAh/g. Xu⁴ proposed to decrease the mass loading and to add MnSO₄ to the electrolyte, enabling the reversibility to rise to 100 cycles. Although later studies reached more than 5000 cycles, Zn-MnO₂ coin cells were always cycled at high rates (> 5 C) with weakly loaded electrodes (< 1 mg/cm²), corresponding to a gravimetric capacity not higher than 300 mAh/g. These cells do not meet commercial requirements. Moreover, improvements have undergone several slowdowns due to uncertain chemical-electrochemical reaction mechanisms. There is no clear understanding of the electrochemistry behind such systems although at least four explanations have been proposed. Regardless of the MnO₂-conversion mechanisms, precipitation of Zn-layered double hydroxides has been reported, caused by pH increases from the proton consumption during MnO₂-conversion reaction. Such pH changes are perceived as a critical problem for the system's sustainability due to the poor stability of zinc at extreme pH.

Lately, ICP-MS quantification confirmed that the main electrochemical reaction is driven by the dissolution/precipitation of MnO₂. A novel explanation for ZHS (Zinc Hydroxide Sulphate) precipitation / dissolution process was proposed, which likely involves a complex sol-gel chemistry of metal cations (refs. 4,5). Such reactions lead to abrupt pH changes at the cathode interface, resulting in the precipitation of ZnSO₄-electrolyte into ZHS (Zinc Hydroxide Sulphate). Contrary to what was postulated in the 90s, such a process may be far from being undesirable, since it buffers the pH through its high reversible chemical precipitation/dissolution^{7,8}. However, because of the rapid precipitation it can also induces passivation of the cathode material. This has been shown for alkaline batteries.

Thus, rechargeable Zn-MnO₂ cells still shown critical problems in terms of capacity retention, poor gravimetric capacity (not exceeding 300 mAh/g, compared to the theoretical capacity of 617 mAh/g), dendrite growth, and most importantly, capacity fading due to the low stability of the electrolyte in time caused by its vulnerability to water splitting reactions. To address these problems, researchers have chosen to limit the mass loading and increase the electrolyte volume in the cell while maintaining high C-rates. These limitations do not meet commercial demands. To date, minimising one of these issues, lead to the increase of at least one other, and usually more, issues. Hence, unlike alkaline batteries, rechargeable Zn-MnO₂ batteries have not been used in practical applications, and their development remains uncertain.

It has now been found most surprisingly that the use of urea as an electrolyte additive in an aqueous solution of a zinc salt provides an unexpected improvement in terms of cycling stability, in particular at high and/or low temperature, without having substantial negative effects in terms of gravimetric capacity, C-rate, electrolyte volume and/or protecting the electrode surface by preventing dendritic growth.

Urea has been used as an additive in aqueous electrolyte for lithium-ion battery electrolyte because of its capacity to reduce the dissolution of lithium manganese oxide⁷. In electrochemical reactions driven by the dissolution / precipitation of MnO₂, there could have been no indication that stability improvements could be achieved.

### Description of the invention

According to one embodiment the invention relates to an aqueous electrolyte which can advantageously be used in a Zn-MnO₂ electrochemical devices such as a cell or a battery (stack of cells). The electrolyte composition comprises water, a zinc salt, preferably this salt is ZnSO₄, and urea.

The composition is preferably in a liquid or semi liquid (i.e., viscous state). The zinc salt is advantageously, in part or wholly in a dissolved state. The concentration of urea can be up, or close to, to the saturation point of urea in the composition, e.g., up to 10 Molar (M). As it will be directly understood, the working temperature of the electrolyte must be considered when selecting the concentration of urea or of any other components of the electrolyte composition. Unless otherwise stated, the electrolyte working temperature ranges from -25°C to 70°C. According to a preferred embodiment, the working range of temperature is -13°C to 60°C, more preferably 5°C to 55°C or even simply room temperature. Advantageously, the concentration of urea within the electrolyte of the invention is chosen in the range from 0.1 M to 10 M, preferably from 2 M to 9 M and even more preferably from 4 M to 8.5 M, in particular, 8 M ± 0.5 M. The concentration of zinc sulphate (ZnSO₄) in the electrolyte composition is advantageously chosen below the saturation point and in particular up to or below 3.5 M (saturation in water). It is preferred to select a concentration of 1 M to 3.5 M and more preferably a concentration ranging from 2 M to 3 M, such as around 3 M or 2 M. It is further preferred that the concentration of water exceed 24 M and advantageously ranges from 50 M to 26 M.

According to an embodiment of the invention the electrolyte composition consists, or essentially consists, of water, urea, and a zinc salt (e.g., ZnSO₄). According to this embodiment the urea concentration may be high, and may range from 4 M to 10 M e.g., 10 M and the concentration of ZnSO₄ may be ranging from 1.5 to 3.5 M, e.g., around 2 M or 3 M.

According to another preferred embodiment of the invention the electrolyte composition comprises at least one further component and/or a mixture thereof. This further component may be a sulphate-ion donor compound, such as H₂SO₄ or Zn₄(OH)₆SO₄. Sulfuric acid (H₂SO₄) is particularly preferred as such an electrolyte shows improved stability at high temperature (e.g., 55°C). The concentration of sulfuric acid may be up to 1.5 M, but is advantageously ranging from 0.1 M to 1 M and more preferably from 0.1 M to 0.5 M and even more advantageously from 0.5 M to 0.7 M.

According to an embodiment of the invention the electrolyte composition consists, or essentially consists, of water, urea, a zinc salt (e.g., ZnSO₄) and sulfuric acid. According to this embodiment the urea concentration may be high, and ranges from 5 M to 9.5 M, e.g., around 8 M, the concentration of ZnSO₄ may be ranging from 1.5 M to 3.5 M, e.g., around 2 M or 3 M and the concentration of H₂SO₄ may be ranging from 0.1 M to 0.8 M, e.g., around 0.5 M. - The amount of H⁺ ions added should advantageously be kept below 30% of the expected first discharge experimental capacity. This concentration helps to neutralize the electrolyte and minimise zinc corrosion. According to a variant of the electrolyte composition of the invention, it can be advantageous to increase the concentration of sulphate ions in the electrolyte, for example by adding Zn₄(OH)₆SO₄ powder to the H₂SO₄-comprising electrolyte until saturation, as this would reduce the amount of H⁺ in the solution.

Alternatively, or additionally, the further component may be an organic compound, in particular dimethyl sulfoxide (DMSO), guanidium sulphate or a mixture thereof. The concentration of DMSO can be up to 8M and is advantageously chosen so as not to go beyond the saturation point of the electrolyte composition at the working temperature. A preferred concentration range of DMSO is 0.1 M to 4.6 M for cycling at room temperature and may be higher of the selected temperature is higher such as 55°C.

The concentration of guanidium sulphate can be up to 3M and is advantageously chosen so as not to go beyond the saturation point of the electrolyte composition at the working temperature. A preferred concentration range of guanidium sulphate is 0.1 M to 2 M for cycling at room temperature and may be higher of the selected temperature is higher such as 55°C.

According to an embodiment of the invention the electrolyte composition consists, or essentially consists, of water, urea, a zinc salt (e.g., ZnSO₄) and DMSO and/or guanidium sulphate, eventually in combination with sulfuric acid. According to this embodiment the urea concentration may be, e.g., around 8 M, the concentration of ZnSO₄ may be ranging from 1.5 M To 3.5 M, e.g., around 2 M or 3 M, the concentration of DMSO or guanidine may be ranging from 0.5 to 3.5 M, e.g., 2 M and the concentration of sulfuric acid be ranging from 0.1 M to 0.5 M, e.g., 4 M.

According to a preferred embodiment of the invention, a further component that can be present in the electrolyte of the invention is a zinc salt such as Zn (OTf)₂ or Zn(OAc)₂. The concentration of such an additional zinc salt may be 0.1 M to 2M.

Alternatively, or additionally, the further component may be manganese salt and in particular manganese sulphate. This salt can be added up to a concentration of, preferably, 0.5 M. It is however preferred to select the concentration of Zn²+ and SO4²⁻ in the electrolyte so as not to exceed the saturation concentration of ZnSO₄ (which is 3.5 M in water).

As the skilled person will understand, the concentration of the various components of the electrolyte composition according to the invention, when in a liquid or viscous state, will be advantageously selected in order to avoid precipitation of any components, in particular salt such as sulphate salts, it may contain.

According to a preferred embodiment of the invention the electrolyte composition does not comprise lithium ions, and preferably does not comprise neither lithium nor chloride ions.

According to another preferred embodiment of the invention the electrolyte composition does not comprise chloride ions as these ions can have some deleterious effect on the performances of the composition.

According to a preferred embodiment of the invention the electrolyte composition does not comprise any additive usually used to improve the performance of the cathode (i.e., the manganese dioxide-containing electrode) *per se.* Such additives are in particular PTFE, PVDF or any other metallic oxide.

The electrolyte composition is particularly suited to be used in an electrochemical device such as a Zn-MnO₂ cell and/or battery. This device is also an object of the invention. A battery is composed of one or more electrochemical cells. In particular, this electrolyte is adapted to be used for the manufacture of rechargeable battery, storage battery, or secondary cell of this type which can be charged, discharged into a load, and recharged many times. The electrolyte composition according to the invention can be used in small volume (e.g., no more than 16µl per mg) and therefore the size of the battery according to the invention reduced.

A further object of the invention is to provide an electrochemical cell comprising a first electrode comprising, or consisting essentially of, zinc, a second electrode comprising MnO₂, an electrolyte according to the invention as described therein, a separator to separate the negative electrode from the positive electrode and conduct ions and a current collector.

The zinc-containing electrode can advantageously be treated by providing a series of stripping and plating steps. This can be carried out a high current density which may ranges from 20 to 10 mA/cm², to a Zn-Zn cell. Advantageously at least 9 cycles of stripping and plating are applied. It is preferred that the treatment starts with a stripping step and finishes with a plating step. The electrolyte used during this pre-treatment comprises an aqueous solution of zinc sulphate at a concentration which range from 1 M to 3 M, advantageously, 2 M. More preferably, the electrolyte further comprises guanidium sulphate at a concentration which may also range from 1 M to 3 M, advantageously, 2 M. Also, it can be advantageous to limit the plating and stripping step to a charge of about 2 mAh. Guanidium sulphate seems to create a thin organic layer that can react as a SEI, protecting the anode from corrosion issues and in particular dendrite growth. The cycle life of a Zn-MnO₂ cell, or battery, having such a pre-treated Zn electrode can thus be substantially extended, e.g., by up to 50 or 80 cycles. Better results are obtained if the last step is a plating step. This pre-treatment step is another object of the invention which is separate and distinct from the electrolyte of the invention; i.e., it may be used independently and with other type of electrolytes than the one of the invention. The second electrode of the Zn-MnO₂ cell of the invention may be at least partially or essentially constituted of, a powder. This powder preferably comprises a mixture of particles of MnO₂ and of a conductive additive such as carbon black. The average particle size of this powder, measured by FEG-SEM image,
, is preferably below 5 µm, more preferably ranging from 0.5 µm and 2µm, e.g., 1.33 µm. The powder is preferably not substantially compressed or in a film like configuration. It is thus preferred that no PTFE or PVDF be used as binder er even that no binding material be used. It is further preferred that in this electrode MnO₂ and the conductive additive are present in a mass ratio of 45 to 65, preferably 50/50. The second electrode has a mass loading which may range from 5 mg/cm² to 15 mg/cm², and is most preferably about 10 mg/cm².

The separator separates the negative electrode from the positive electrode and conduct ions. The separator is advantageously made of glass fibre and preferably glass microfibers. A Whatman glass microfibre separator of grade D is preferred. Its pore size 2.7 µm. However, a Whatman separator of grade A (pore size 1.7 µm) or C (pore size 1.2 µm) can also be used. A glass microfibre separator can advantageously be combined to combined to a second separator such as Celgard or Bellcore.

The current collector can be made of any suitable material. It is preferred to avoid the use aluminium or copper.

A further object of the invention is the use of the electrolyte and/or of the electrochemical cell of the invention for the manufacture of an electrochemical device, and in particular a rechargeable battery.

It is a further object of the invention to use urea as an additive for stabilising an electrolyte composition of a Zn-MnO₂ electrochemical device, said composition comprising H₂O and a zinc salt, in particular ZnSO₄. The electrolyte and/or the electrochemical device, their uses and embodiments are as described in this specification.

A yet further object of the invention is a process for stabilising an electrolyte composition of a Zn-MnO₂ electrochemical device, said process comprising the step of providing a composition comprising H₂O and a zinc salt, in particular ZnSO₄ and urea, in particular by adding or mixing urea to a mixture comprising a zinc salt and water. The electrolyte and/or the electrochemical device, their uses and embodiments are as described in this specification.

It should be understood, that the specific 7 examples provided below, while are given by way of illustration and not limitation.

### Brief description of the figures

**Figure 1** shows galvanostatic and pressure curves at 25°C for MnO₂-Ketjenblack / Zn cells cycled in A) 2 M ZnSO₄, B) 2 M ZnSO₄ in 4.6 M DMSO aqueous solution, and C) in an electrolyte according of the invention which is described in Example 1:2 M ZnSO₄ + 8M urea. All cells were started after 4h at rest (or Open Circuit Voltage (OCV)).
Figures 2A-F and H show galvanostatic profiles as a function of the capacity of MnO₂-Ketjenblack/ Zn cells described in comparative example 5, in particular:
   - the electrolyte used in the cell of Figure 2A is a solution of 2 M ZnSO₄ in water,
   - the electrolyte used in the cell of Figure 2B is a 2 M solution of ZnSO₄ in DMF (4.6 M) and water;
   - the electrolyte used in the cell of Figure 2C is a 2 M solution of ZnSO₄ in ethylene glycol (5.6 M) and water;
   - the electrolyte used in the cell of Figure 2D is a 2 M solution of ZnSO₄ in DMSO (4.6 M) and water,
   - the electrolyte used in the cell of Figure 2E is a 2 M solution of ZnSO₄ in glycerol (4.35 M) and water,
   - the electrolyte used in the cell of Figure 2F is a 2 M solution of ZnSO₄ in glucose (2 M) and water,
   - the electrolyte used in the cell of Figure 2H is a 2 M solution of ZnSO₄ in guanidium sulphate (2 M) and water.

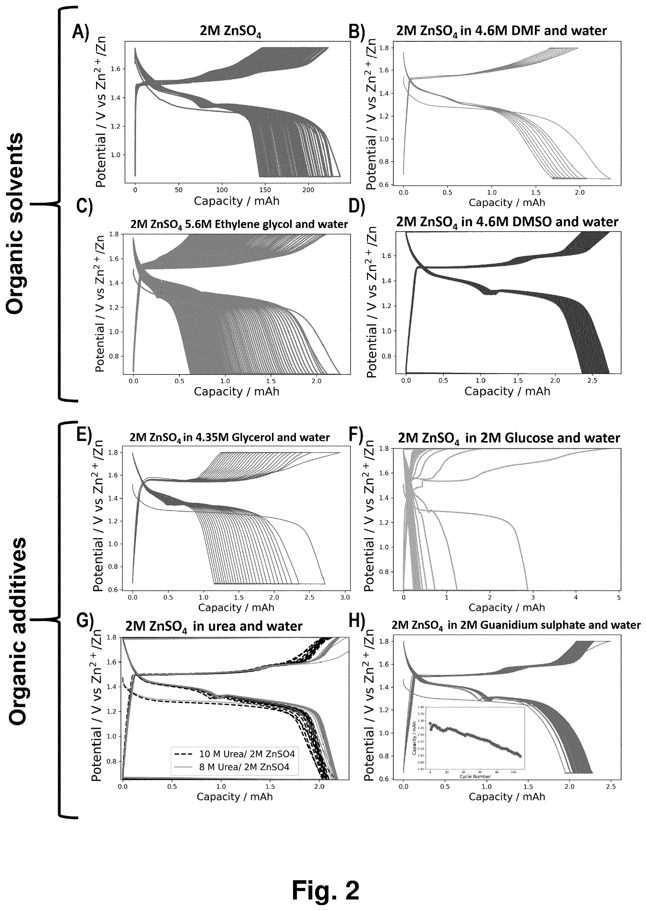

**Figure 2G** show galvanostatic profiles as a function of the capacity of the cells of the invention described in Example 4, wherein the electrolyte is a 2M solution of ZnSO₄ in urea (8 M or 10 M) and water.

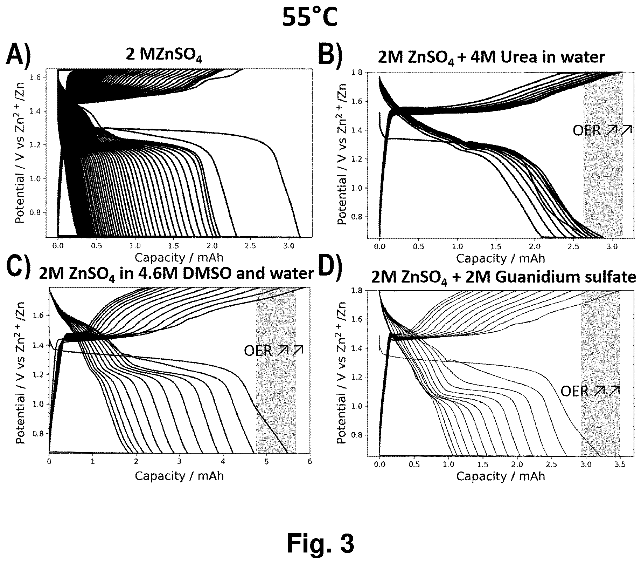

**Figures 3A, 3C and 3D** show the galvanostatic profiles as a function of capacity, at 55°C, of cells described in comparative example 5, having as an electrolyte A) 2M ZnSO₄ in water, C) a mixture of 2 M ZnSO₄ in DMSO/water (4.6 M DMSO) and D) a mixture of 2 M ZnSO₄ + 2 M guanidium sulphate in water.
**Figure 3B** shows galvanostatic profiles as a function of capacity at 55°C of a cell of the invention described in example 4, wherein the electrolyte according to the invention is a mixture of 2 M ZnSO₄ + 4 M urea in water.

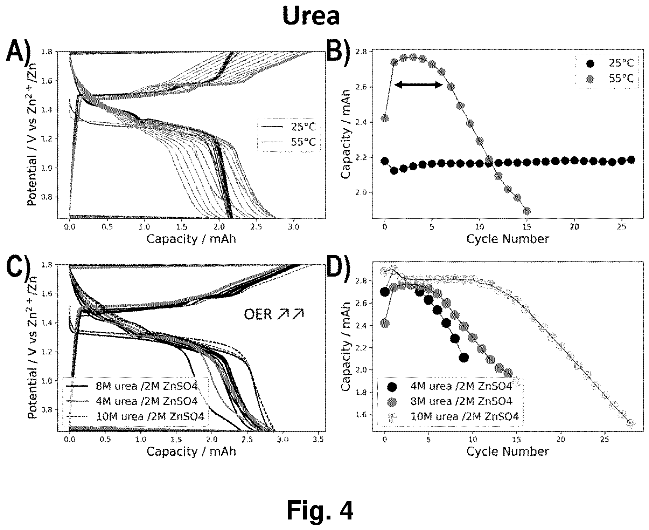

Figures 4A - 4D show galvanostatic profiles as a function of capacity of a Zn-MnO₂ cell according to the invention, for A) an electrolyte having a urea concentration 8 M in water cycled at 25°C and B) an electrolyte having a urea concentration a 4 M, 8 M and 10 M in water cycled at 55°C; and their respective cycling performances (B and D).

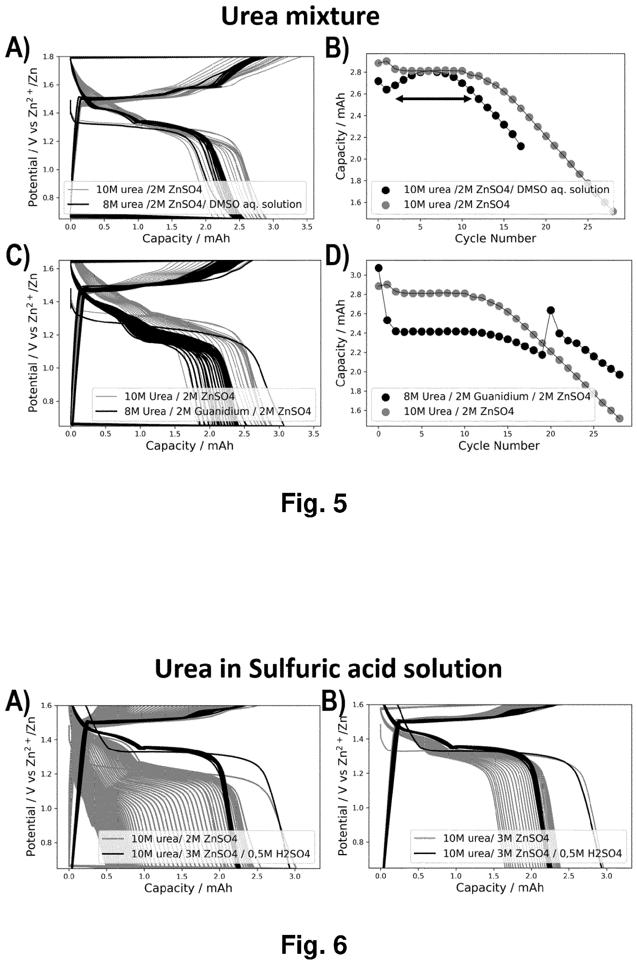

Figures 5A - 5D show galvanostatic profiles as a function of capacity, at 55°C, of a Zn-MnO₂ cell according to the invention, for a A) an 8 M urea / 4.6 M DMSO / 2 M ZnSO₄ aqueous electrolyte and a 10 M urea / 2 M ZnSO₄ aqueous electrolyte and C) a 10 M urea / 2 M ZnSO₄ and 8 M urea / 2M guanidium sulphate/ 2 M ZnSO₄ aqueous electrolyte; and their respective cycling performances (B and D).
Figures 6A - AB show Galvanostatic profiles as a function of capacity, at 55°C, of a Zn-MnO₂ cell according to the invention, as described in example 1 and 2a for A) a 2 M ZnSO₄ + 10 M urea and a 2 M ZnSO₄ + 10 M urea + 0.5 M H₂SO₄ electrolytes and for B) a 3 M ZnSO₄ + 10 M urea and a 3 M ZnSO₄ + 10 M urea + 0.5 M H₂SO₄ aqueous electrolytes.

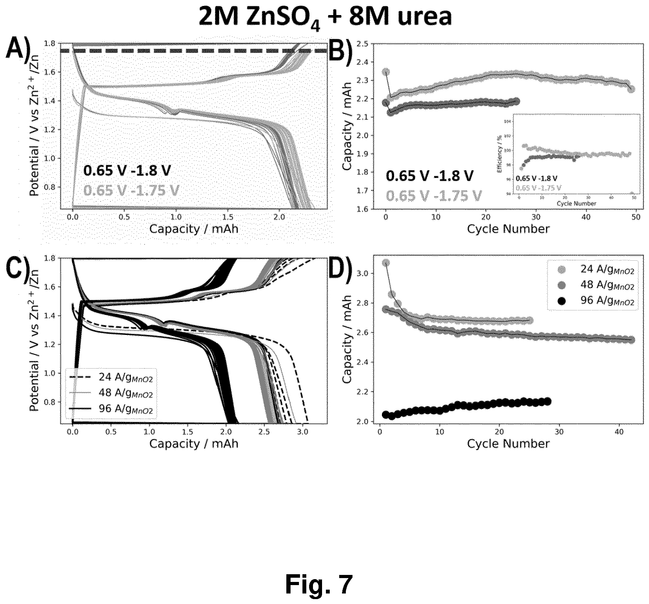

Figures 7A - 7D show galvanostatic profiles as a function of capacity at 25°C for an electrochemical cell of the invention as described in Example 4, having an electrolyte mixture of 2 M ZnSO₄ + 8 M urea in water, A) cycled with different charge cut-off voltages (0.65 V - 1.8 V and 0.65 V - 1.75 V) at a C/4 rate (96 A/g_{MnO2}) and C) cycled at different discharged rates (96 A/g_{MnO2}; 48 A/g_{MnO2} and 24 A/g_{MnO2}); and their respective cycling performance B) and D).

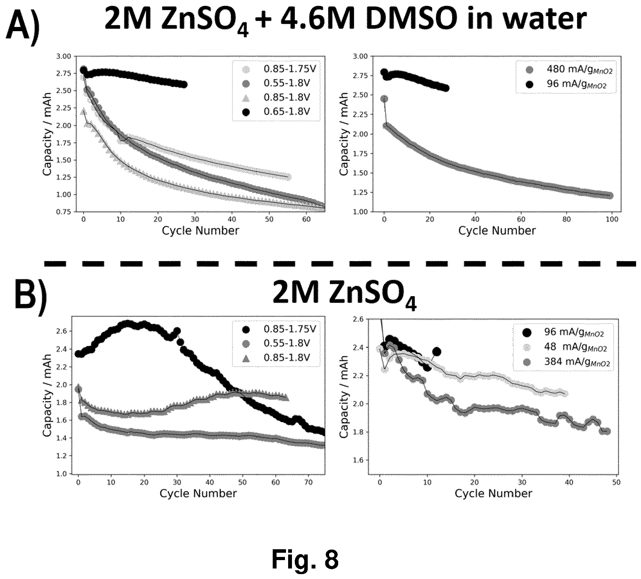

**Figure 8A** shows the capacity as a function of cycle number at 25°C of an electrochemical cell not containing urea, having as an electrolyte a mixture of 2 M ZnSO₄ + 4.6 M DMSO in water, cycled with different cut-off voltage (0.85 V - 1.75 V, 0.55 V - 1.8 V, 0.85 V - 1.8 V and 0.65 V - 1.8 V) and its cycling performances at a 96 A/g_{MnO2} rate and at a 480 A/g_{MnO2}.
**Figure 8B** shows the capacity as a function of cycle number at 25°C of an electrochemical cell not containing urea, having an electrolyte mixture of 2 M ZnSO₄ in water, cycled with cut-off voltage: 0.85 V - 1.75 V, 0.55 V - 1.8 V and 0.85 V - 1.8 V at a C/4 rate (96 A/g_{MnO2}) , and its cycling performances at a C/4 (96 A/g_{MnO2}) , C/8(48 A/g_{MnO2}) and 1C(384 A/g_{MnO2}) discharged rate.

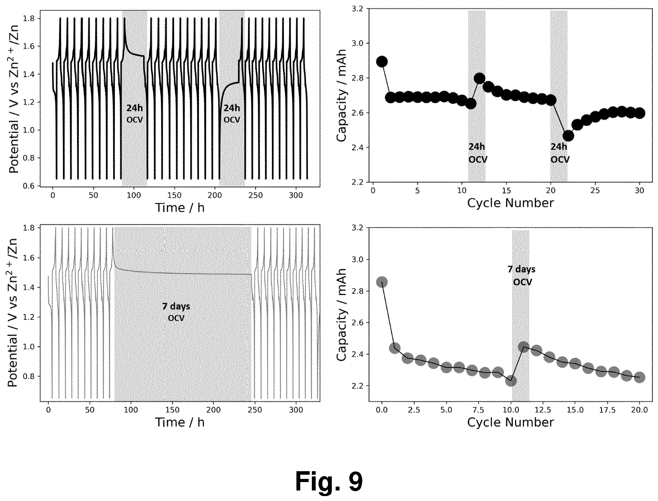

**Figure 9** shows galvanostatic curves as a function of time at 25°C for an electrochemical cell of the invention as described in Example 4, cycled in 2 M ZnSO₄ + 10M urea in water with either 24h or 7 days resting periods, and corresponding cycling performances. The 24h/7 days OCV time were fixed at the end of the charge and discharge.

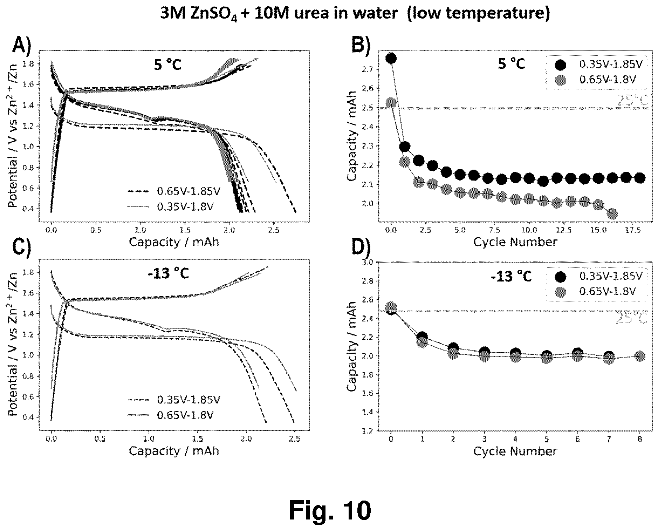

Figures 10A - 10D show galvanostatic profiles as a function of capacity for an electrochemical cell of the invention as described in Example 4, cycled in 3 M ZnSO₄ + 10 M urea in water, and corresponding cycling performances at A-B) 5°C at current of ±0.624 mA (96 mA/g_{MnO2}) and C-D) -13°C at current of ±0.312 mA (48 mA/g_{MnO2}).

### Example 1: Preparation of an electrolyte (ZnSO₄ and urea in water) and of an electrochemical device according to the invention.

### Electrolyte synthesis

Urea was mixed with Milli-Q ultrapure water and stirred for 5 minutes. Then ZnSO₄ was added and the mixture stirred until complete dissolution. The following final concentrations in water were used:
2 M ZnSO₄ + 4 M urea;
2 M ZnSO₄ + 8 M urea;
2 M ZnSO₄ + 10 M urea; and
3 M ZnSO₄ + 10 M urea.

### Cell

MnO₂ was synthesized by slowly adding 50 mL of 0.6 M Na₂S₂O₈ drop by drop to a round-bottom flask containing 125 mL of 0.2 M MnSO₄. The reaction mixture was heated and subjected to magnetic stirring. The resulting precipitate was thoroughly washed with Milli-Q water, filtered through a cellulose ester filter, and subsequently dried at 100°C under vacuum (using a Büchi vacuum pump) for 20 hours. The resulting MnO₂ exhibited a needle-shaped agglomerate morphology with particles arranged radially, resembling a sea-urchin-like structure, and possessing a diameter of less than 1 µm. The particle size advantageously remains in the micrometric range to maintain a high gravimetric capacity.

The MnO₂ (positive) electrode was made of 50 wt% carbon black (Ketjenblack 600 JD - CAS number 1333-86-4) and 50 wt.% MnO₂ which were mixed together by hand grinding. The total cathode mass was fixed at 12.5 mg which is equivalent to a mass loading of 5 mg/cm² to 10 mg/cm². The cathode mixture was incorporated by packing it on a glass fibre separator (GF/D, 1.27 cm Ø).

The zinc anode (Zn disk of 1 cm Ø) was washed only with ethanol before being introduced into the cell.

In one example the zinc anode was subjected to a pre-cycling treatment: Two Zinc metal electrodes, each with a diameter of 1.1 cm, were placed facing each other in an electrochemical cell having a volume of 5 ml filled with an aqueous solution of 2M ZnSO₄. The treatment involved a sequence of Zn plating and Zn stripping, which was repeated 9 times. The current density applied was 10 mA/cm². The plating/stripping process was limited to a charge of 2 mAh. The results obtained by using an electrode which has been treated by this process is shown in Figures 5C and 5D. In this particular case, this pre-treated Zn electrode is used with an electrolyte of the invention which is an aqueous mixture of 2 M ZnSO₄ (2 M) and urea (10 M). In all other examples of the invention the zinc electrode was simply washed with ethanol before being used.

The cell was assembled without applying any pressure.

Stainless steel or titanium plungers were used for testing at 25°C and glassy carbon plungers for testing at 55°C.

Thereafter, 100 µL of the selected electrolyte were carefully incorporated at the top of the separator using a micropipette.

For all the electrochemical tests, a PFA Hardware Swagelok cell was used in a two-electrode configuration. The cells were started after 4h at OCV (except when the H₂SO₄-containing electrolyte was used) and the current density used was ± 96 A/gMnO₂ with 100 µL electrolyte, and the cathode mass was kept constant at 12.5 mg for all experiments. The cycling rate established correspond to a C-rate of C/4 (unless otherwise specified).

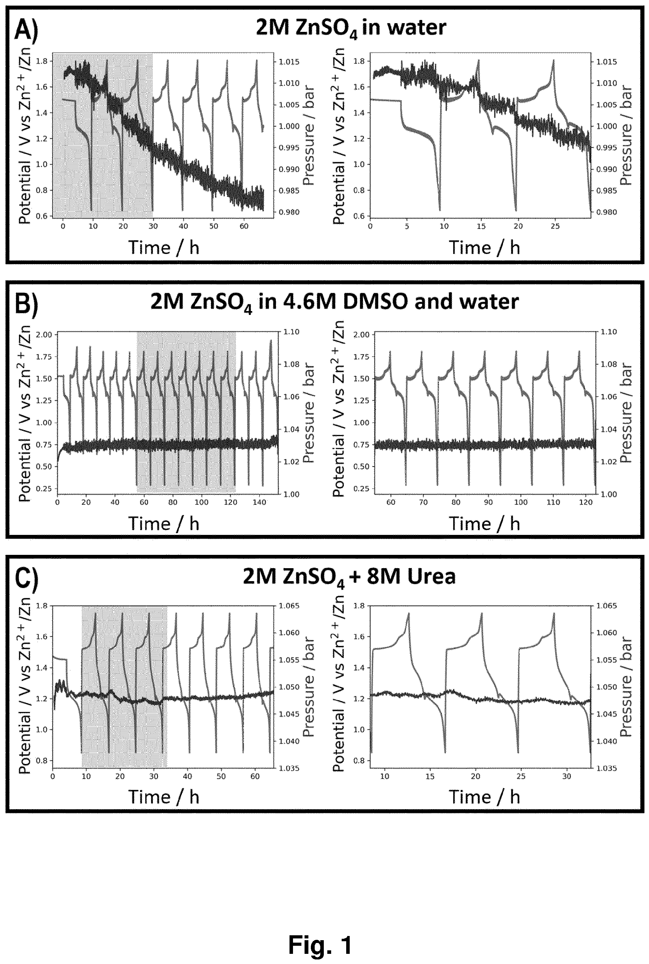

Also, unless otherwise specified, the voltage window was set between 0.85 and 1.75 V (Fig.1) or 0.65 and 1.8V (Fig. 2 and 3) and the C-rate used was C/4.

### Example 2: Preparation of an electrolyte (ZnSO₄, urea and DMSO in water) and of an electrochemical device according to the invention.

An electrolyte composition of 2M ZnSO₄ / 4.6M DMSO was prepared in two steps. First, water and DMSO were mixed, and the resulting solution was used to dissolve 2M ZnSO₄ in a volumetric flask. The cell was prepared and tested as described in example 1.

### Example 3: Preparation of an electrolyte (ZnSO₄, urea and Guanidium sulphate in water) and of an electrochemical device according to the invention

Electrolyte compositions of and 8M Urea / 2M guanidium sulphate were prepared according to the following steps: First, 2M ZnSO₄ was prepared, and the resulting solution was used to dissolve 10M urea + guanidium sulphate in a volumetric flask. The cell was prepared and tested as described in example 1.

### Example 4: Preparation of an electrolyte (ZnSO₄, urea and H₂SO₄ in water) and of an electrochemical device according to the invention

An electrolyte composition of 10M Urea / 3M ZnSO₄ / 0.5M H₂SO₄ was prepared in two steps. First, 0.5M H₂SO₄ was mixed with 2M ZnSO₄ water solution, and the resulting solution was used to dissolve 10M urea in a volumetric flask.

When cycling at 55°C with such an electrolyte, the process should be initiated without an OCV (Open Circuit Voltage) time to avoid damage to the anode.

The concentration of H₂SO₄ in the electrolyte can vary depending on the experimental conditions. However, the amount of H⁺ ions should always be kept lower than 30% of the expected experimental capacity to properly neutralize the electrolyte.

The cell was prepared and tested as described in example 1.

### Comparative examples 5: Preparation of electrolytes consisting of ZnSO₄ dissolved in water with or without other additives and solvent and electrochemical device.

Various aqueous electrolytes were prepared in order to compare their performances to electrolyte compositions according to the invention.
2 M ZnSO₄ + 4.6 M DMSO, 2 M ZnSO₄ + 5.6 M ethylene glycol, and 2 M ZnSO₄ + 4.6 M DMF were prepared by mixing 2 volumes of Milli-Q ultrapure water with 1 volume of these organic solvents. The mixtures were stirred for 5 minutes, followed by the addition of ZnSO₄ salt.

A similar procedure was used for the electrolytes: 2 M ZnSO₄ + 4.35 M glycerol, 2 M ZnSO₄ + 2 M glucose, and 2 M ZnSO₄ + 2 M guanidium sulphate.

The cell was prepared and tested as described in example 1, but for the electrolyte used.

### Comments

In a standard Zn-MnO₂ cell, the pressure within the cell shows a significant decrease upon the 6 first cycles (coming from ORR). By contrast, the pressure of a urea-containing electrolyte cell according to example 1, as well as a DMSO-containing electrolyte cell, remains stable during the cycling at a voltage from 0.65 to 1.75V, as well as over a wider voltage range of 0.3V-1.8V (see figure 1).

Figure 2A and 2G shows the improvement in terms of capacity retention of the urea containing electrolyte over a standard 2M ZnMnO₂ cell (Fig. 2A). In terms of organic solvents, only DMSO exposes higher capacity retention upon cycling compared to 2 M ZnSO₄-electrolyte. Such stability can be explained by the fact that the decomposition of solvated H₂O considerably decreases since strong H₂O-DMSO interactions are formed. In terms of organic additives (or salts) glycerol and glucose show low-capacity retention (Fig. 2E and 2F). Urea (and guanidium) seems to considerably increase the cycling stability of such systems (Figure 2H and G). The performance of 4M urea and 2M guanidium sulphate is comparable at 25°C but not at 55°C (Figure 3B and D) where urea shows better stability over both urea and DMSO. Indeed, cycling at high temperature shows an extra capacity upon the charge, which likely comes from a spread of side reaction at such temperature (mainly water splitting). Such a reaction induces critical issues upon the cycling, notably by the fact that oxygen evolution can poison the zinc anode. Guanidium sulphate seems to decompose at 1.7 V and DMSO also shows poor performances compared to urea (See Fig. 3).

The urea-containing electrolyte retains its great stability despite different currents applied (see Figure 7A- 7D) which represent a great improvement considering the behaviour of DMSO additive or of ZnSO4 free-additive electrolyte under similar conditions (see Figure 8). As shown in Fig.7B a cell according to the invention shows 99% efficiency and a high-capacity retention for more than 50 cycles, with a gravimetric capacity close to 400 mAh/g (MnO₂) and an aerial capacity between 2-4 mAh/cm².

When self-discharge conditions were applied by alternating cycling periods with 24-hour OCV time the performances of the cell are preserved after the discharge/charge rest-time (see figure 9).

The urea-containing electrolyte according to the invention is much less affected by the high temperature (cf. Fig. 4B). Furthermore, increasing the concentration of urea (Fig. 4) or adding either DMSO (Figure 5A and 5B) or guanidine or pre-treating the zinc electrode (Fig. 5C and 5D) allows to further increase the stability of the electrolyte of the invention at high temperature.

Surprisingly good performances are obtained by adding sulfuric acid to the electrolyte of the invention. As shown in Figure 6, where the electrolyte of example 4 is used, remarkable capacity retention at 55°C is obtained.

The electrolyte containing urea, as per the invention, exhibits also great stability at low temperatures. However, it appears that the conductivity is affected, as we need to reduce the C-rate to C/8 (48 A/g_{MnO2}) in order to recover 80% of the capacity at 25°C.

### Reference list:

1. Yamamoto, T. & Shoji, T. Rechargeable ZnIZnSO, IMnO+pe Cells. Inorganica Chim Acta 117, 27-28 (1986).
2. Shoji, T. & Yamamoto, T. Charging and discharging behavior of zinc-manganese dioxide galvanic cells using zinc sulfate as electrolyte. Journal of Electroanalytical Chemistry 362, 153-157 (1993).
3. Shoji, T., Hishinuma, M. & Yamamoto, T. Zinc-manganese dioxide galvanic cell using zinc sulphate as electrolyte. Rechargeability of the cell. J Appl Electrochem 18, 521-526 (1988).
4. Xu, C., Li, B., Du, H. & Kang, F. Energetic Zinc Ion Chemistry: The Rechargeable Zinc Ion Battery. Angewandte Chemie 124, 957-959 (2012).
5. Godeffroy, L. et al. Decoupling the Dynamics of Zinc Hydroxide Sulfate Precipitation/Dissolution in Aqueous Zn-MnO2 Batteries by Operando Optical Microscopy: A Missing Piece of the Mechanistic Puzzle. Adv Energy Mater 12, (2022).
6. Aguilar, I. et al. Identifying interfacial mechanisms limitations within aqueous Zn-MnO2 batteries and means to cure them with additives. Energy Storage Mater 53, 238-253 (2022).
7. Fitz, O. et al. Electrolyte Study with in Operando pH Tracking Providing Insight into the Reaction Mechanism of Aqueous Acidic Zn//MnO2 Batteries. ChemElectroChem 8, 3553-3566 (2021).
8. Bischoff, C. F. et al. Revealing the Local pH Value Changes of Acidic Aqueous Zinc Ion Batteries with a Manganese Dioxide Electrode during Cycling. J Electrochem Soc 167, 020545 (2020).

## Claims

1. An electrolyte composition for a Zn-MnO₂ electrochemical device said electrolyte comprising water, zinc sulphate and urea.

2. The electrolyte composition of claim 1, wherein it further comprises a sulphate iondonor compound, preferably H₂SO₄.

3. The electrolyte composition of claims 1 or 2, wherein the concentration of urea ranges from 0.1 M to 10 M.

4. The electrolyte composition of any one of claims 1 to 3, wherein the concentration of said zinc salt ranges from 0.1 M to 3.5M, preferably 3M.

5. The electrolyte composition of any one of claims 1 to 5, wherein said electrolyte further comprises an organic solvent, such as DMSO.

6. The electrolyte composition of any one of claims 1 to 5, wherein said electrolyte composition further comprises an organic additive such as guanidium sulphate.

7. The electrolyte composition of any one of claims 1 to 6, wherein said electrolyte composition further comprises a manganese salt, such as MnSO₄, preferably in a concentration lower than 1M.

8. The electrolyte composition of any one of claims 1 to 7, wherein said composition does not comprise lithium ions, and preferably does not comprise neither lithium nor chloride ions.

9. An electrochemical cell comprising a first electrode comprising zinc, a second electrode comprising MnO₂, an electrolyte, a separator (to separate the negative electrode from the positive electrode and conduct ions) and a current collector, wherein said electrolyte is as being as described in any one of the preceding claims.

10. The electrochemical cell according to claim 9, wherein said zinc-comprising electrode is treated by a series of stripping and plating steps by applying a current density ranging 20 to 10 mA/cm², to an electrochemical cell comprising this electrode and another Zn-comprising electrode and an electrolyte comprising an aqueous solution of zinc sulphate and/or an aqueous solution of guanidium sulphate.

11. The electrochemical cell according to claim 9 or 10, wherein said second electrode comprise, or is essentially constituted of, a powder which preferably comprises a mixture of particles of MnO₂ and a conductive additive such as carbon black.

12. The electrochemical cell according to any one of claims 9 to 11, wherein MnO₂ and the conductive additive are present in a mass ratio of 45 to 65, preferably 50/50.

13. The electrochemical cell according to anyone of claims 9 to 12, wherein said second electrode has a mass loading of 10 mg/cm².

14. The use of the electrolyte and/or of the electrochemical cell described in any one of the proceeding claims for the manufacture of an electrochemical device such as a rechargeable battery.

15. The use of urea as an additive for stabilising an electrolyte composition of a Zn-MnO₂ battery, said composition comprising H₂O and a zinc salt.
